# FASCICULE DE BREVET EUROPEEN

(11) **EP 4 526 211 B1**
(45) Date de publication et mention de la délivrance du brevet: **26.11.2025**
(21) Numéro de dépôt: 24751312.0
(22) Date de dépôt: 12.07.2024
(51) Int. Cl.: B64G 1/64

(54) **PROCÉDÉ ET SYSTÈME SPATIAL POUR L'ÉJECTION D'UN EMPILEMENT DE SATELLITES**
RAUMSYSTEM UND VERFAHREN ZUM AUSSTOSSEN EINES SATELLITENSTAPELS
SPACE SYSTEM AND METHOD FOR EJECTING A STACK OF SATELLITES

(30) Priorité: 17.07.2023 FR 2307298
(43) Date de publication de la demande: 26.03.2025
(73) Titulaire: Airbus Defence and Space SAS, 31402 Toulouse Cedex 4 (FR)
(72) Inventeur: TAJAN, Florent, 31402 Toulouse Cedex 4 (FR)
(74) Mandataire: Plasseraud IP
(86) Numéro de dépôt international: PCT/FR2024/050963
(87) Numéro de publication internationale: WO 2025/017258

(56) Documents cités:
- CN-A- 112 591 144
- CN-A- 114 084 381
- CN-A- 115 610 712
- US-A1- 2018 265 227
- US-A1- 2023 061 366

## Description

### Domaine technique

La présente divulgation concerne un procédé d'éjection d'un empilement de satellites comprenant plusieurs étages superposés où chaque étage comprend plusieurs satellites. La présente divulgation concerne également un système spatial comprenant un lanceur et un empilement de satellites, adapté pour la mise en oeuvre d'un tel procédé.

### Technique antérieure

Le déploiement massif de constellations de satellites impose de réduire les coûts de lancement par satellite et donc de proposer des solutions pour le lancement simultané d'un ensemble de satellites. A cet égard, il est connu d'empiler plusieurs satellites dans la coiffe d'un lanceur, voire de stocker dans la coiffe d'un lanceur un empilement constitué de plusieurs colonnes de satellites. Ainsi, un même lanceur peut stocker trois à quatre colonnes de satellites, pouvant comprendre par exemple jusqu'à douze satellites chacune, soit par exemple 48 satellites par lancement (voir, par exemple, le document CN114084381).

Or, le procédé d'éjection des empilements de satellites doit être mis en œuvre en minimisant les risques de collision entre les satellites lors de l'éjection puis en orbite.

### Résumé

La présente divulgation vient proposer une solution à ce problème.

Il est proposé un procédé d'éjection d'un empilement de satellites contenus dans un lanceur, l'empilement de satellites comprenant une pluralité d'étages, chaque étage de l'empilement comprenant au moins deux satellites disposés autour d'un axe géométrique central de l'empilement, et dans lequel les satellites d'un des étages, à l'exception du premier étage, sont empilés sur les satellites du précédent étage, le procédé d'éjection étant caractérisé en ce qu'il est mis en œuvre à partir d'une configuration initiale dans laquelle les satellites de l'empilement sont maintenus solidaires entre eux et solidaires du lanceur par un dispositif de maintien et de libération, des premières quantités d'énergie étant stockées dans des dispositifs d'écartement disposés entre les étages consécutifs de l'empilement et tendant à séparer deux étages consécutifs de l'empilement, les premières quantités d'énergie stockées entre deux étages consécutifs étant décroissantes depuis les deux extrémités de l'empilement vers le milieu de l'empilement et les dispositifs d'écartement entre deux étages consécutifs générant des efforts décroissants depuis les deux extrémités de l'empilement vers le milieu de l'empilement, et en ce qu'il comprend :
- une orientation du lanceur en tangage de sorte que l'axe de l'empilement de satellites soit incliné par rapport à un axe tangent à une orbite de défilement des satellites, dit axe de défilement,
- une libération des satellites par rapport au lanceur et entre eux, provoquant la libération des premières quantités d'énergie stockées entre les étages de l'empilement, résultant en l'application d'efforts, selon l'axe de l'empilement, sur les différents étages de satellites, dont les projections sur l'axe de défilement sont différentes pour chaque étage, et
- une application, sur les satellites d'un même étage, lors de la libération des satellites, d'actions dans un plan radial, par rapport à l'axe de l'empilement correspondant à une direction longitudinale, dont les projections sur l'axe de défilement sont différentes pour chaque satellite de l'étage, la libération des satellites intervenant à un angle en roulis déterminé en fonction des premières quantités d'énergie stockées et des actions dans le plan radial.

Dans des modes de réalisation, l'empilement de satellites comprend au moins un ressort mécanique préchargé entre tous les satellites consécutifs de l'empilement, la précharge des ressorts formant lesdites premières quantités d'énergie stockées.

Dans des modes de réalisation, la variation des premières quantités d'énergie stockées et/ou des efforts exercés par les dispositifs d'écartement, entre deux étages consécutifs, depuis les extrémités vers le milieu de l'empilement, est mise en œuvre par au moins l'un parmi :
- une variation de la raideur des ressorts,
- une variation de la précharge appliquée aux ressorts, et
- une variation du nombre de ressorts.

Dans des modes de réalisation, le procédé comprend, avant la libération des satellites, au moins une mise en rotation du lanceur par rapport à l'axe d'empilement, ladite mise en rotation donnant aux satellites d'un même étage des composantes différentes de vitesse selon l'axe de défilement, lors de la libération des satellites, la libération des satellites intervenant à un premier angle en roulis.

Dans des modes de réalisation, le procédé comprend en outre l'envoi de télécommandes depuis une station au sol envoyant :
- Une télécommande d'inclinaison déterminée en tangage,
- Une télécommande de mise en rotation du lanceur autour de l'axe longitudinal à une vitesse de rotation déterminée,
- Une télécommande de libération de l'ensemble des satellites à un angle de roulis déterminé correspondant au premier angle.

Dans des modes de réalisation, dans la configuration initiale, des secondes quantités d'énergie sont également stockées entre les satellites voisins, disposés face à face dans un même étage, tendant à écarter les satellites voisins, de sorte que la libération des satellites provoque en outre la libération desdites secondes quantités d'énergie et l'application, sur les satellites d'un même étage, d'efforts radiaux, la libération des satellites intervenant à un second angle en roulis.

Dans des modes de réalisation, le procédé comprend l'envoi de télécommandes depuis une station au sol envoyant :
- Une télécommande d'inclinaison déterminée en tangage
- Une télécommande d'orientation en roulis du lanceur à un angle déterminé correspondant au second angle
- Une télécommande de libération de l'ensemble des satellites.

Dans des modes de réalisation, dans la configuration initiale, au moins une troisième quantité d'énergie est stockée entre une paroi de l'anneau de support de l'empilement et l'empilement de satellites, tendant à séparer l'empilement de cette paroi de support.

Dans des modes de réalisation, la troisième quantité d'énergie stockée entre la paroi de l'anneau de support et l'empilement de satellites implique un effort longitudinal supérieur à l'effort longitudinal maximal entre deux satellites d'étages consécutifs et par ailleurs la troisième quantité d'énergie stockée est supérieure à la quantité d'énergie maximale stockée entre deux étages consécutifs de l'empilement.

Selon un autre objet, il est décrit un système spatial d'éjection d'un empilement de satellites comprenant une pluralité d'étages, comprenant un lanceur recevant l'empilement de satellites supporté par un anneau du lanceur, chaque étage de l'empilement comprenant au moins deux satellites disposés autour d'un axe géométrique central de l'empilement, et dans lequel les satellites d'un des étages, à l'exception du premier étage, sont empilés sur les satellites du précédent étage, le lanceur comprenant un dispositif de maintien et de libération des satellites maintenant les satellites de l'empilement solidaires entre eux et solidaires du lanceur dans une configuration initiale, caractérisé en ce que des premières quantités d'énergie sont stockées dans des dispositifs d'écartement disposés entre les étages consécutifs de l'empilement et tendant à séparer deux étages consécutifs de l'empilement, les premières quantités d'énergie stockées entre deux étages consécutifs étant décroissantes depuis les deux extrémités de l'empilement vers le milieu de l'empilement et les dispositifs d'écartement entre deux étages consécutifs générant des efforts décroissants depuis les deux extrémités de l'empilement vers le milieu de l'empilement, et en ce qu'il comprend :
- un premier module de commande d'une orientation du lanceur en tangage de sorte que l'axe de l'empilement de satellites soit incliné par rapport à un axe tangent à une orbite de défilement des satellites, dit axe de défilement,
- un second module de commande d'une libération des satellites par rapport au lanceur et entre eux, provoquant la libération des premières quantités d'énergie stockées entre les étages de l'empilement, résultant en l'application d'efforts, selon l'axe de l'empilement, sur les différents étages de satellites, dont les projections sur l'axe de défilement sont différentes pour chaque étage, et
- un troisième module d'application, sur les satellites d'un même étage, lors de la libération des satellites, d'actions dans un plan radial, par rapport à l'axe de l'empilement correspondant à une direction longitudinale, dont les projections sur l'axe de défilement sont différentes pour chaque satellite de l'étage,
la libération des satellites intervenant à un angle en roulis déterminé en fonction des premières quantités d'énergie stockées et des actions dans le plan radial.

Dans des modes de réalisation, l'empilement de satellites comprend au moins un ressort mécanique préchargé entre tous les satellites consécutifs de l'empilement, la précharge des ressorts formant lesdites premières quantités d'énergie stockées.

Dans des modes de réalisation, la variation des premières quantités d'énergie stockées et/ou des efforts exercés par les dispositifs d'écartement, entre deux étages consécutifs, depuis les extrémités vers le milieu de l'empilement, est mise en œuvre par au moins l'un parmi :
- une variation de la raideur des ressorts,
- une variation de la précharge appliquée aux ressorts, et
- une variation du nombre de ressorts.

Dans des modes de réalisation, le troisième module commande, avant la libération des satellites, au moins une mise en rotation du lanceur par rapport à l'axe d'empilement, ladite mise en rotation donnant aux satellites d'un même étage des composantes différentes de vitesse selon un axe de défilement des satellites, lors de la libération des satellites, la libération des satellites étant prévue à un premier angle en roulis.

Dans des modes de réalisation, le troisième module réalise un stockage de secondes quantités d'énergie stockées entre les satellites voisins, disposés face à face dans un même étage, tendant à écarter les satellites voisins, de sorte que la libération des satellites provoque en outre la libération desdites secondes quantités d'énergie et l'application, sur les satellites d'un même étage, des efforts radiaux, la libération des satellites étant prévue à un second angle (voir nouvelle figure) en roulis.

Dans des modes de réalisation, dans la configuration initiale, au moins une troisième quantité d'énergie est stockée entre une paroi de l'anneau de support de l'empilement et l'empilement de satellites, tendant à séparer l'empilement de cette paroi.

Dans des modes de réalisation, la troisième quantité d'énergie stockée entre la paroi de l'anneau de support et l'empilement de satellites implique un effort longitudinal supérieur à l'effort longitudinal maximal entre deux satellites d'étages consécutifs et par ailleurs la troisième quantité d'énergie stockée est supérieure à la quantité d'énergie maximale stockée entre deux étages consécutifs de l'empilement.

Le procédé d'éjection proposé permet avantageusement d'éjecter de façon simultanée un empilement de satellites comprenant plusieurs satellites à chaque étage en minimisant le risque de collision, à long terme, entre les satellites, car il permet que tous les satellites de l'ensemble présentent, lors de l'éjection, une vitesse différente selon l'axe de défilement des satellites.

En effet, s'agissant des satellites appartenant à des étages consécutifs de l'empilement, la libération des satellites est réalisée à partir d'une configuration initiale dans laquelle une quantité d'énergie est stockée entre chaque étage, la quantité d'énergie entre deux étages étant variable le long de l'empilement, il en résulte donc une vitesse d'éjection différente pour chaque satellite le long de l'axe lanceur.

En outre, s'agissant des satellites d'un même étage, l'application d'un effort radial ou d'une mise en rotation de l'ensemble apportant un écart de vitesse radialement, permet de conférer à ces satellites une vitesse différente selon un axe orthogonal au lanceur.

Selon un autre avantage, l'inclinaison du lanceur par rapport à l'axe de défilement des satellites, confère des vitesses individuelles distinctes, selon l'axe de défilement.

### Brève description des dessins

D'autres caractéristiques, détails et avantages apparaîtront à la lecture de la description détaillée ci-après, et à l'analyse des dessins annexés, sur lesquels :
**Fig. 1**

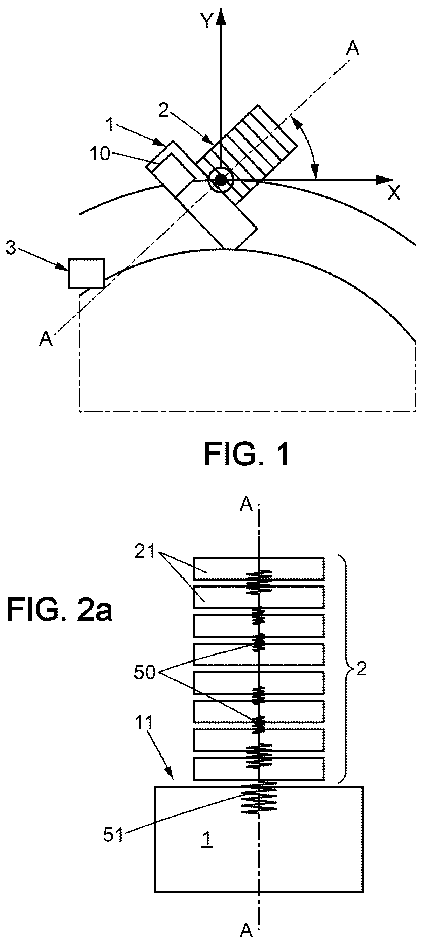

   [Fig. 1] représente schématiquement un système spatial selon un exemple de réalisation et les conventions utilisées selon l'invention.
**Fig. 2a**
   [Fig. 2a] représente schématiquement un exemple de quantités d'énergie stockées entre les étages de l'empilement de satellites dans la configuration initiale selon l'invention.
**Fig. 2b**

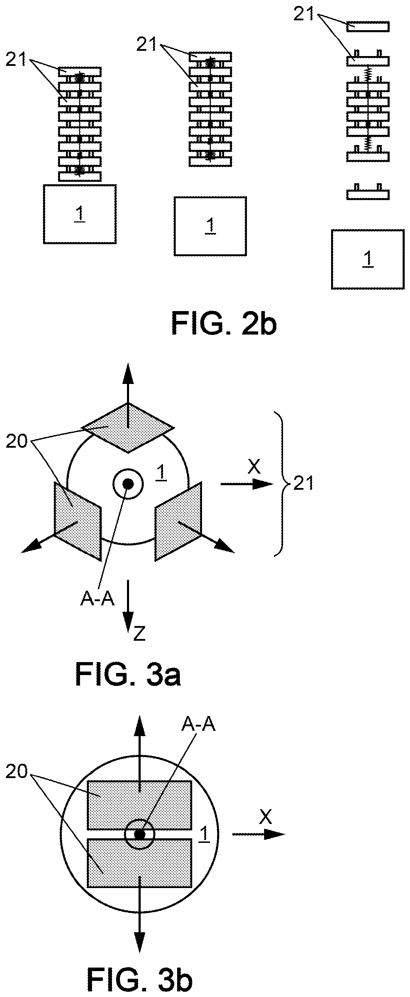

   [Fig. 2b] représente schématiquement l'ordre de séparation des étages de l'empilement de satellite induite par la libération de l'énergie stockée selon l'invention.
**Fig. 3a**
   [Fig. 3a] représente schématiquement des exemples de vecteurs vitesse, orientés radialement, de satellites d'un même étage lors de l'éjection selon l'invention.
**Fig. 3b**
   [Fig. 3b] représente schématiquement un exemple de configuration des satellites d'un même étage.
**Fig. 3c**

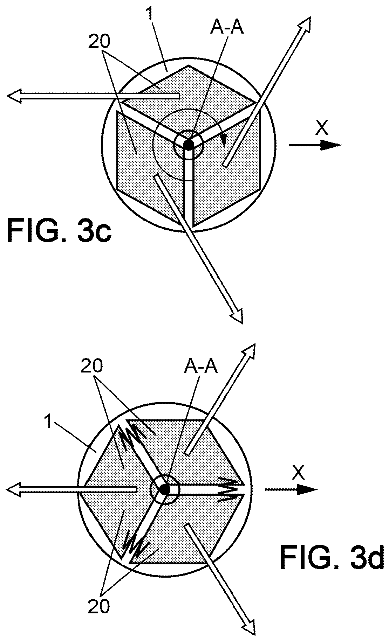

   [Fig. 3c] représente schématiquement des exemples de vecteurs vitesse ortho-radiaux de satellites d'un même étage lors de l'éjection selon l'invention.
**Fig. 3d**
   [Fig. 3d] représente schématiquement des exemples de vecteurs vitesse radiaux de satellites d'un même étage lors de l'éjection selon l'invention.
**Fig. 4**

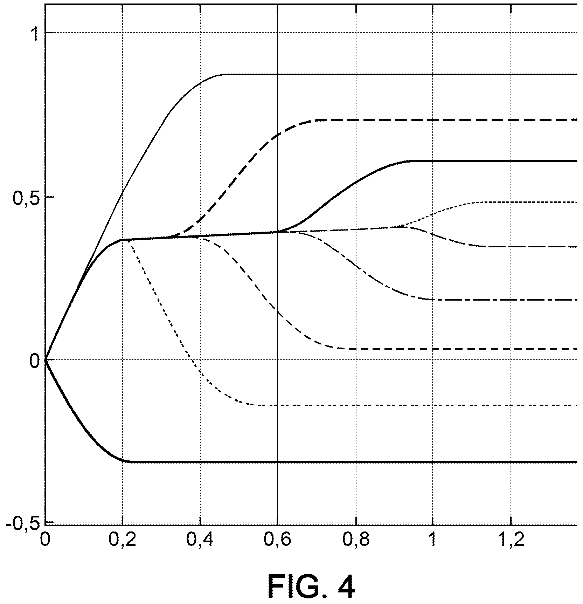

   [Fig. 4] représente un exemple de séparation des satellites selon l'invention.
**Fig. 5a**

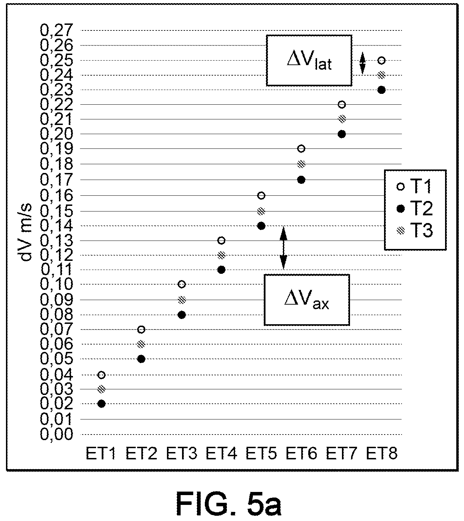

   [Fig. 5a] représente une simulation d'un premier exemple de répartition des vitesses de l'ensemble des satellites de l'empilement sur l'axe de défilement après libération selon l'invention.
**Fig. 5b**

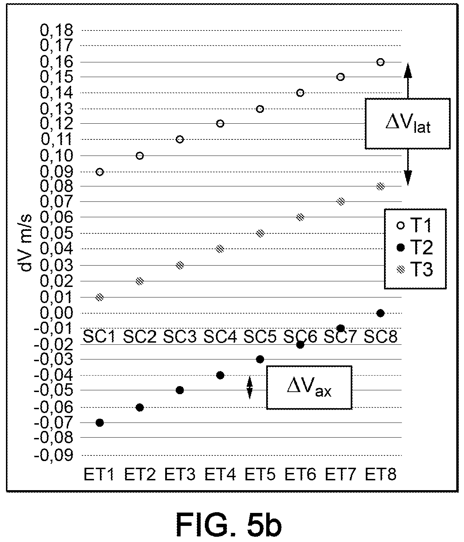

   [Fig. 5b] représente une simulation d'un deuxième exemple de répartition des vitesses de l'ensemble des satellites de l'empilement sur l'axe de défilement après libération selon l'invention.
**Fig. 6**

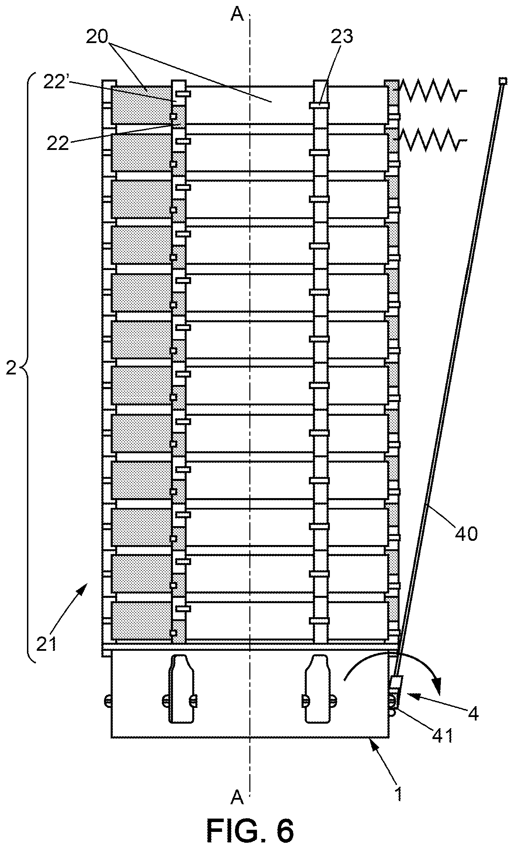

   [Fig. 6] représente schématiquement un exemple de dispositif de maintien et de libération de l'empilement de satellites selon l'invention.
**Fig. 7**

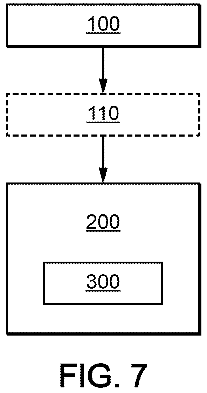

   [Fig. 7] représente schématiquement un exemple de procédé d'éjection d'un empilement de satellites selon l'invention.

### Description des modes de réalisation

En référence aux figures annexées, on va maintenant décrire un procédé d'éjection d'un empilement 2 de satellites 20 contenus dans un lanceur 1. Ce procédé peut notamment être mis en œuvre pour la mise en orbite d'une constellation de satellites autour de la Terre. Ces satellites peuvent être placés sur une orbite terrestre basse (ou LEO pour l'acronyme anglais Low Earth Orbit), ou sur une orbite terrestre moyenne (MEO) ou encore sur une orbite terrestre géostationnaire (GEO). Les satellites de l'empilement peuvent être, mais non limitativement, des satellites de télécommunication. Le procédé selon l'invention peut être commandé par un dispositif de commande 10 embarqué dans le lanceur, comprenant par exemple un calculateur, formé par exemple par un ou plusieurs microcontrôleurs, microprocesseurs, FPGA, DSP, ASIC, etc. Le dispositif de commande peut commander un dispositif de maintien et de libération de l'empilement de satellites. Le dispositif de commande 10 peut par exemple recevoir des instructions depuis une station au sol 3, la station étant en communication avec le lanceur et envoyant des télécommandes au dispositif de commande pour la mise en œuvre des différentes étapes du procédé. Le dispositif de commande peut par exemple comprendre une mémoire (non représentée), par exemple de type disque dur magnétique, mémoire électronique, disque optique, etc., stockant des instructions de code exécutées par le calculateur pour la mise en œuvre du procédé selon l'invention.

On a représenté schématiquement sur les figures, notamment 1 et 2a, un lanceur 1 contenant un empilement 2 de satellites 20. L'empilement comprend plusieurs étages 21 de satellites superposés les uns sur les autres selon une direction d'empilement. Le premier étage de satellites est quant à lui monté sur une paroi 10 de support du lanceur 1.

En référence par exemple aux figures 3a à 3c, chaque étage 21 comprend au moins deux satellites 20 disposés autour d'un axe géométrique central A-A de l'empilement, de préférence répartis régulièrement autour de cet axe. Chaque étage 21 comprend par exemple entre deux et cinq satellites, et on a représenté sur les figures 3a, 3c et 3d un exemple dans lequel chaque étage comprend trois satellites, et sur la figure 3b un exemple dans lequel chaque étage comprend deux satellites 20. Tous les étages comprennent par exemple le même nombre de satellites.

De plus, tous les satellites d'un même étage, et de préférence tous les satellites de l'empilement, sont par exemple identiques. Selon un exemple non limitatif, représenté schématiquement sur la figure 6, chaque satellite 20 peut comprendre deux extrémités opposées destinées à être en contact avec des extrémités respectives de satellites voisins d'un même étage de l'empilement, chaque extrémité comprenant un demi-pied de support 22, 22' s'étendant sur la moitié de la hauteur du satellite, considérée dans la direction A-A de l'empilement. Les demi-pieds de support 22, 22' des deux extrémités opposées d'un même satellite s'étendent sur respectivement deux moitiés différentes de la hauteur du satellite, de sorte qu'un demi-pied de support d'une extrémité d'un satellite repose sur un demi-pied support du satellite voisin. Un étage 21 de satellites peut ainsi être formé où chaque satellite 20 comprend un demi-pied de support reposant sur celui d'un satellite voisin, et un autre demi-pied de support sur lequel s'appuie celui d'un satellite voisin. Les pieds de support des satellites des différentes étages sont en outre alignés de sorte que les satellites soient empilés les uns sur les autres par leurs pieds de support.

Dans des modes de réalisation, et comme représenté sur l'exemple de la figure 6, chaque satellite peut comprendre, en plus des demi-pieds de support 22, 22' qui viennent se superposer à ceux des satellites voisins, au moins un pied de support complémentaire 23, s'étendant une portion de la périphérie du satellite située entre les deux extrémités, ces pieds de support s'étendant sur toute la hauteur du satellite et venant s'empiler sur le pied de support complémentaire 23 du satellite de l'étage inférieur.

En outre, les satellites sont maintenus solidaires entre eux et solidaires du lanceur par un dispositif 4 de maintien et de libération, dans une configuration initiale adoptée pendant toute la durée du lancement du lanceur et jusqu'à l'éjection des satellites. Le dispositif de maintien et de libération 4 est configuré pour permettre une libération simultanée de l'ensemble des satellites de l'empilement 2. Selon un exemple non limitatif, et toujours en référence à la figure 6, le dispositif 4 de maintien et de libération peut comprendre une pluralité de bras 40 répartis autour de l'empilement 2 de satellites, où chaque bras est relié d'une part, au lanceur et d'autre part, au moins à l'étage 21 de l'empilement le plus éloigné de la paroi de support du lanceur. Alternativement, chaque bras peut être relié à l'ensemble des étages de l'empilement. Chaque bras 40 peut par exemple être relié au lanceur par une liaison pivot 41 autour d'un axe tangentiel par rapport à l'axe central A-A de l'empilement, de manière à écarter le bras de l'empilement par rotation lors de la libération des satellites.

De plus, le dispositif de maintien et de libération 4 est configuré pour appliquer un effort axial de compression dans la direction de l'empilement, sur l'empilement des satellites. Le dispositif de maintien comprend par exemple des bras appliquant un effort de compression axiale. L'effort de compression permet de maintenir la pile lors des vibrations provoquées au lancement. Pour reprendre l'exemple décrit ci-avant, les bras 40 du dispositif de maintien et de libération peuvent également comprendre un dispositif de mise en tension (non représenté) des bras, permettant l'application de cet effort axial de compression.

En outre comme décrit plus en détails ci-après, l'empilement de satellites stocke une énergie axiale tendant à éloigner les étages de satellites les uns des autres. Cette énergie d'éloignement est stockée tant que le dispositif de maintien exerce son action. En référence aux figures 2a et 2b, dans la configuration initiale dans laquelle les satellites sont maintenus solidaires entre eux et solidaires du lanceur, des premières quantités d'énergie sont stockées dans des dispositifs d'écartement 50 schématiquement représentés, disposés entre les étages consécutifs de l'empilement, les quantités d'énergie stockées tendant à séparer deux étages 21 consécutifs de l'empilement. Les dispositifs d'écartement 50 génèrent un effort tendant à séparer les étages de l'empilement, cet effort générant une énergie stockée du fait de la configuration initiale empilée dans laquelle sont maintenus les satellites.

Les dispositifs d'écartement 50 sont par exemple des ressorts mécaniques préchargés, c'est-à-dire comprimés par rapport à leur position au repos, entre deux étages consécutifs 21 de l'empilement, la précharge des ressorts générant le stockage d'une énergie potentielle élastique tendant à séparer les étages 21 lors de la libération de l'empilement. Alternativement, d'autres dispositifs d'écartement peuvent être utilisés tels que des aimants exerçant une force électromagnétique tendant à séparer les étages. Les dispositifs d'écartement peuvent par exemple se présenter sous la forme de vérins linéaires comprenant par exemple chacun un ressort.

Comme représenté schématiquement sur la figure 2a, les quantités d'énergie stockées entre deux étages 21 de l'empilement ne sont pas toutes identiques selon les paires d'étages considérées. Plus précisément, la quantité d'énergie stockée entre deux étages 21 consécutifs de l'empilement est décroissante depuis les extrémités de l'empilement vers le milieu de l'empilement, les extrémités et le milieu étant considérés le long de l'axe A-A de l'empilement 2. En revanche, les quantités d'énergie stockées peuvent être symétriques par rapport au milieu de l'empilement considérés selon l'axe X-X, c'est-à-dire que la même quantité d'énergie peut être stockée entre les deux premiers étages et les deux derniers étages, puis une même quantité d'énergie, inférieure, peut être stockée entre les étages 2 et 3 d'une part, et entre les étages n-2 et n-1 d'autre part, où n désigne le dernier étage de l'empilement, et ainsi de suite.

Les efforts générés par les dispositifs d'écartement entre deux étages consécutifs de l'empilement sont également décroissants depuis les deux extrémités de l'empilement vers le milieu de l'empilement.

Les dispositifs d'écartement fournissent ainsi des énergies décroissantes et des efforts décroissants. Les énergies stockées sont réglées pour atteindre des vitesses finales déterminées qui correspondent aux écarts finaux entre chaque courbe de la [Fig. 4]. Les efforts sont réglés pour séquencer la séparation, comme représenté à la [Fig. 4], où les courbes se séparent deux à deux au fur-et-à-mesure.

Dans le cas où les dispositifs d'écartement 50 sont des ressorts mécaniques, la variation d'énergie stockée d'une paire d'étages à une autre peut être obtenue par au moins l'un parmi :
- une variation de la raideur des ressorts,
- une variation de la précharge appliquée aux ressorts qui en outre peuvent par exemple se présenter sous la forme de ressorts identiques, et
- une variation du nombre de ressorts qui en outre peuvent par exemple se présenter sous la forme de ressorts identiques.

Par exemple, la variation entre deux quantités d'énergie stockées entre deux paires d'étages peut être obtenue en utilisant des ressorts 50 de raideurs différentes, avec potentiellement la même précharge appliquée sur les ressorts, ou en utilisant un ensemble de ressorts 50 tous identiques, c'est-à-dire de raideur identique, mais en faisant varier le nombre de ressorts interposés entre différentes paires d'étages, et/ou en faisant varier la précharge de ressorts interposés entre différentes paires d'étages.

Comme représenté schématiquement sur la figure 2b, cette distribution variable de l'énergie stockée et des efforts générés par les dispositifs d'écartement 50 au sein de l'empilement 2 permet d'induire, lors de la libération simultanée de tous les étages 21, une cinématique de séparation des étages avec des vitesses différenciées, où plus l'énergie stockée entre deux étages est importante, plus la vitesse de séparation des étages est importante. De fait, les étages les plus éloignés du centre de l'empilement sont séparés en premier, et les étages les plus proches du centre de l'empilement sont séparés en dernier.

De plus, et comme illustré sur la figure 4, qui représente les composantes selon l'axe X de défilement des vitesses des différents étages de l'empilement, cette distribution variable de l'énergie stockée confère également aux étages de satellites des vitesses différentes. En référence à la figure 1, lorsque l'empilement des satellites est incliné par rapport à un axe X tangent à l'orbite de défilement des satellites, désigné par axe de défilement des satellites, les composantes des vitesses des étages de satellites selon l'axe X de défilement sont différenciées. L'obtention de vitesses selon l'axe de défilement différentes à l'éjection des satellites permet d'éviter des risques, à long terme, de collision des satellites entre eux.

Par conséquent, et en référence à la figure 7, le procédé d'éjection de l'empilement comprend une étape 100 d'orientation du lanceur 1, par exemple à partir d'une orientation initiale dans laquelle l'empilement 2 de satellites s'étend selon une direction A-A sensiblement radiale par rapport à la Terre ou l'astre autour duquel les satellites doivent être mis en orbite, pour incliner l'empilement de satellites par rapport à l'axe X de défilement. L'angle d'inclinaison en tangage peut par exemple être compris entre 10° et 80°, par exemple égal à 45°. Dans le cas d'éjection axiale et latérale avec des ressorts, le choix de cet angle permettra de déduire l'énergie à stocker dans les ressorts axiaux et celle à stocker dans des ressorts transversaux. Le choix de cet angle résulte donc d'un compromis pour le dimensionnement du système d'éjection. L'orientation du lanceur peut être réalisée par exemple au moyen de propulseurs. Cette étape d'orientation du lanceur 1 peut par exemple comprendre la réception par le dispositif de commande 10 du lanceur d'une télécommande d'inclinaison en tangage de la valeur d'angle d'inclinaison mentionné ci-avant émise par une station au sol 3.

Une mise en rotation du lanceur 110 autour de son axe A-A peut éventuellement être commandée préalablement ou consécutivement à l'orientation 100.

Une fois le lanceur correctement orienté, le procédé peut comprendre la libération 200 simultanée des satellites, cette libération étant opérée par le dispositif 40 de maintien et de libération. En reprenant l'exemple fourni précédemment de dispositif de maintien et de libération, tous les bras 40 peuvent se séparer simultanément de l'empilement pour permettre la libération des satellites, et la libération des quantités d'énergie stockées entre deux étages consécutifs de l'empilement. Cette étape de libération 200 peut comprendre la réception par le dispositif de commande 10 du lanceur d'une télécommande de libération émise par la station au sol 3.

Dans des modes de réalisation, une quantité d'énergie peut également être stockée entre la base de l'empilement 2 et la paroi de support 11 du lanceur, qui peut par exemple être un anneau de support, sur lequel est monté l'empilement, cette quantité d'énergie tendant à séparer l'empilement de satellites de la paroi du lanceur. Comme précédemment pour les premières quantités d'énergie contenues entre les étages de satellites, cette quantité d'énergie peut être stockée sous la forme d'un dispositif d'écartement 51, par exemple un ressort mécanique préchargé, un vérin linéaire ou un dispositif magnétique tendant à écarter l'empilement de satellites du lanceur. La quantité d'énergie stockée entre la base de l'empilement et la paroi de support du lanceur est de préférence strictement supérieure à la quantité d'énergie maximale stockée entre deux étages de l'empilement, de façon à éviter que l'étage de satellites le plus proche de la paroi du lanceur ne percute cette paroi lors de la libération, sous l'effet de la libération de l'énergie stockée entre cet étage et l'étage supérieur.

En outre, et en référence à la figure 3a, pour que les composantes des vitesses, en projection selon l'axe de défilement, des satellites soient non seulement différentes d'un étage à l'autre, mais également entre deux satellites d'un même étage, le procédé d'éjection comprend une application 300, sur les satellites d'un même étage, lors de la libération 200 des satellites, d'actions dans un plan radial par rapport à l'axe A-A de l'empilement, dont les projections sur l'axe X de défilement des satellites sont différentes pour tous les satellites du même étage. Les actions dans le plan radial peuvent par exemple être exercées par la mise en rotation du lanceur. Les actions dans le plan radial peuvent par exemple être exercées par les ressorts transversaux entre satellites d'un même étage, exerçant des forces et des niveaux d'énergies déterminés.

Les actions exercées sur les satellites d'un même étage sont par exemple les mêmes en valeur absolue, mais on peut obtenir des projections différentes sur l'axe X de défilement, en libérant les satellites avec une orientation déterminée en roulis de l'empilement. Cette orientation est fonction notamment de la façon dont sont appliquées les actions radiales sur les satellites. Notamment les actions exercées grâce à une mise en rotation autour de l'axe A-A, comme représenté à la [Fig. 3c] diffèrent des actions exercées grâce à des ressorts transversaux comme représenté à la [Fig. 3d], ce qui implique des choix d'orientations différentes lors de la libération. Les ressorts transversaux de la [Fig. 3d] écartent en effet les satellites selon des directions radiales, tandis que la mise en rotation autour de l'axe A-A écarte les satellites selon des directions ortho-radiales comme représenté en [Fig. 3c].

Par exemple, et comme représenté schématiquement sur la figure 3b, dans le cas où un étage comprend deux satellites, et où les actions exercées sur les satellites s'étendent radialement, la libération doit intervenir pour une orientation en roulis de l'empilement telle que la position des deux satellites n'est pas symétrique par rapport à l'axe X de défilement.

Sur l'exemple de configuration donné à la figure 3b, qui ne permettrait pas de générer des composantes différentes selon l'axe X de défilement et où la méthode d'éjection génère des vitesses radiales, on voit que lorsque la position des deux satellites est symétrique par rapport à l'axe de défilement X, puisque l'action réalisée sur les satellites est radiale, la résultante selon l'axe X serait nulle pour les deux satellites.

De façon analogue, dans le cas de trois satellites, et comme représenté sur la figure 3d, deux des trois satellites ne doivent pas avoir une position symétrique par rapport à l'axe X, car sinon les résultantes des vitesses radiales générées sur ces satellites selon l'axe X seraient égales. Par conséquent, la libération 200 des satellites est mise en œuvre à un angle de roulis déterminé, en fonction des actions radiales exercées et des énergies axiales stockées.

En référence à la figure 3c, dans des modes de réalisation, le procédé comprend une étape 110 de mise en rotation du lanceur 1 autour de l'axe A-A d'empilement des satellites, avant la libération des satellites, et la libération des satellites 200 est réalisée alors que le lanceur est en mobile en rotation. L'étape 110 de mise en rotation du lanceur autour de l'axe A-A peut comprendre la réception par le dispositif de commande 110 d'une télécommande de mise en rotation envoyée par la station au sol 3.

Lorsque le lanceur est mobile en rotation autour de son axe A-A, l'écartement entre le centre de gravité du satellite et l'axe de rotation implique une vitesse linéaire ortho-radiale. La vitesse de rotation du lanceur peut par exemple être comprise entre 2 et 10°/s, par exemple comprise entre 3 et 5°/s. De plus, la libération des satellites 200 est réalisée à l'angle de roulis déterminé évoqué ci-avant, pour que les composantes des vitesses des satellites d'un même étage projetées selon l'axe X de défilement soient différentes.

En variante, et comme représenté schématiquement sur la figure 3d, dans des modes de réalisation, les vitesses générées dans un plan radial sur les satellites d'un même étage peuvent résulter de la libération de quantités d'énergie stockées entre les satellites 20 d'un même étage 21, par exemple par des dispositifs d'écartement 52 disposés entre chaque paire de satellites 20 voisins d'un étage, et tendant à séparer ces satellites. Par exemple, les efforts exercés par les dispositifs d'écartement sont tous identiques pour un même étage, de sorte que la résultante des efforts sur un satellite donné par les efforts induits entre ce satellite et ses voisins est radiale. Par exemple, les dispositifs d'écartement peuvent être des ressorts 52 précontraints disposés entre chaque paire de satellites 20 voisins. Alternativement, les dispositifs d'écartement peuvent être des vérins hydrauliques ou des dispositifs magnétiques configurés pour écarter les ressorts.

Les premières quantités d'énergie stockées entre deux étages consécutifs, et les deuxièmes quantités d'énergie stockées entre des satellites voisins d'un même étage permettent d'induire des composantes de vitesses, en projection selon l'axe de défilement, qui sont différentes entre plusieurs étages et entre les satellites d'un même étage. En référence aux figures 5a et 5b, qui représentent en abscisses les étages de satellites considérés, et en ordonnée la vitesse de chaque satellite selon l'axe X de défilement, ces quantités d'énergie respectives peuvent être adaptées en fonction des écarts de vitesses souhaités entre les satellites. Sur ces figures, on a représenté par un même figuré les satellites d'une même tour T, c'est-à-dire les ensembles de satellites superposés les uns aux autres au sein de l'empilement. Le nombre de tours correspond donc au nombre de satellites d'un même étage. Sur l'exemple particulier des figures, l'empilement comprend trois satellites par étages et on a noté T1, T2, T3 les tours formées respectivement par chaque pile de satellites.

Dans l'exemple de réalisation représenté sur la figure 5a, on peut dimensionner les quantités d'énergie entre les satellites d'un même étage de façon à conférer un différentiel de vitesse ΔVₗₐₜ entre ces satellites, et dimensionner les quantités d'énergie entre deux étages de satellites de façon à conférer un différentiel de vitesse ΔVₐₓ supérieur à n fois ΔVₗₐₜ, où n désigne le nombre de satellites par étage.

Dans l'exemple représenté sur la figure 5b, on peut dimensionner les quantités d'énergie entre deux étages de satellites de façon à conférer un différentiel de vitesse ΔVₐₓ, et dimensionner les quantités d'énergie entre les satellites d'un même étage pour conférer un différentiel de vitesse supérieur à N fois ΔVₐₓ où N désigne le nombre d'étages de l'empilement.

Le choix des répartitions des vitesses peut avantageusement être fonction du dimensionnement souhaité pour les dispositifs d'écartement 50, 51 et le cas échéant 52 et du mode d'application d'efforts dans le plan radial entre les satellites d'un même étage.

Références numériques :
- 1 : lanceur
- 10 : dispositif de commande
- 11 : paroi de support
- 2 : empilement de satellites
- 20 : satellite
- 21 : étage de satellites
- 22, 22' : demi-pieds de support
- 23 : pieds de support complémentaires
- 3 : station au sol
- 4 : dispositif de maintien et de libération
- 40 : bras
- 41 : liaison pivot
- 50 : dispositif d'écartement entre deux étages
- 51 : dispositif d'écartement entre le lanceur et l'empilement
- 52 : dispositif d'écartement entre deux satellites
- 100 : orientation du lanceur en tangage
- 110 : mise en rotation du lanceur
- 200 : libération des satellites
- 300 : application d'actions sur les satellites.

## Revendications

1. Procédé d'éjection d'un empilement (2) de satellites (20) contenus dans un lanceur (1), l'empilement de satellites comprenant une pluralité d'étages (21), chaque étage de l'empilement comprenant au moins deux satellites (20) disposés autour d'un axe géométrique central (A-A) de l'empilement, et dans lequel les satellites d'un des étages, à l'exception du premier étage, sont empilés sur les satellites du précédent étage,
le procédé d'éjection étant mis en œuvre à partir d'une configuration initiale dans laquelle les satellites de l'empilement sont maintenus solidaires entre eux et solidaires du lanceur par un dispositif de maintien et de libération (4), des premières quantités d'énergie étant stockées dans des dispositifs d'écartement (50) disposés entre les étages consécutifs de l'empilement et tendant à séparer deux étages consécutifs de l'empilement, les premières quantités d'énergie stockées entre deux étages consécutifs étant décroissantes depuis les deux extrémités de l'empilement vers le milieu de l'empilement et les dispositifs d'écartement entre deux étages consécutifs générant des efforts décroissants depuis les deux extrémités de l'empilement vers le milieu de l'empilement,
et le procédé comprenant :
- une orientation (100) du lanceur en tangage de sorte que l'axe (A-A) de l'empilement de satellites soit incliné par rapport à un axe tangent à une orbite de défilement des satellites, dit axe de défilement,
- une libération (200) des satellites par rapport au lanceur et entre eux, provoquant la libération des premières quantités d'énergie stockées entre les étages de l'empilement, résultant en l'application d'efforts, selon l'axe de l'empilement, sur les différents étages de satellites, dont les projections sur l'axe de défilement sont différentes pour chaque étage, et
- une application (300), sur les satellites (20) d'un même étage (21), lors de la libération des satellites, d'actions dans un plan radial, par rapport à l'axe de l'empilement correspondant à une direction longitudinale, dont les projections sur l'axe de défilement sont différentes pour chaque satellite de l'étage, la libération des satellites intervenant à un angle en roulis déterminé en fonction des premières quantités d'énergie stockées et des actions dans le plan radial.

2. Procédé d'éjection selon la revendication 1, dans lequel l'empilement (2) de satellites (20) comprend au moins un ressort mécanique préchargé (50) entre tous les satellites consécutifs de l'empilement, la précharge des ressorts formant lesdites premières quantités d'énergie stockées.

3. Procédé d'éjection selon la revendication 1, dans lequel la variation des premières quantités d'énergie stockées et/ou des efforts exercés par les dispositifs d'écartement, entre deux étages consécutifs, depuis les extrémités vers le milieu de l'empilement, est mise en œuvre par au moins l'un parmi :
- une variation de la raideur des ressorts (50),
- une variation de la précharge appliquée aux ressorts (50), et
- une variation du nombre de ressorts (50).

4. Procédé d'éjection selon l'une des revendications précédentes, comprenant, avant la libération des satellites, au moins une mise en rotation (110) du lanceur (1) par rapport à l'axe d'empilement (A-A), ladite mise en rotation donnant aux satellites (20) d'un même étage (21) des composantes différentes de vitesse selon l'axe de défilement, lors de la libération des satellites, la libération des satellites intervenant à un premier angle en roulis.

5. Procédé d'éjection, selon la revendication précédente comprenant l'envoi de télécommandes depuis une station au sol envoyant :
- Une télécommande d'inclinaison déterminée en tangage,
- Une télécommande de mise en rotation du lanceur autour de l'axe longitudinal à une vitesse de rotation déterminée,
- Une télécommande de libération de l'ensemble des satellites à un angle de roulis déterminé correspondant au premier angle.

6. Procédé d'éjection selon l'une des revendications 1 à 4, dans lequel, dans la configuration initiale, des secondes quantités d'énergie sont également stockées entre les satellites voisins, disposés face à face dans un même étage, tendant à écarter les satellites voisins, de sorte que la libération des satellites provoque en outre la libération desdites secondes quantités d'énergie et l'application, sur les satellites d'un même étage, d'efforts radiaux, la libération des satellites intervenant à un second angle en roulis.

7. Procédé d'éjection selon la revendication précédente, comprenant l'envoi de télécommandes depuis une station au sol envoyant :
- Une télécommande d'inclinaison déterminée en tangage
- Une télécommande d'orientation en roulis du lanceur à un angle déterminé correspondant au second angle
- Une télécommande de libération de l'ensemble des satellites.

8. Procédé d'éjection selon l'une des revendications précédentes, dans lequel dans la configuration initiale, au moins une troisième quantité d'énergie est stockée entre une paroi de l'anneau de support de l'empilement et l'empilement de satellites, tendant à séparer l'empilement de cette paroi de support.

9. Procédé selon la revendication précédente, dans lequel la troisième quantité d'énergie stockée entre la paroi de l'anneau de support et l'empilement de satellites implique un effort longitudinal supérieur à l'effort longitudinal maximal entre deux satellites d'étages consécutifs et par ailleurs la troisième quantité d'énergie stockée est supérieure à la quantité d'énergie maximale stockée entre deux étages consécutifs de l'empilement.

10. Système spatial d'éjection d'un empilement (2) de satellites (20) comprenant une pluralité d'étages (21), comprenant un lanceur (1) recevant l'empilement (2) de satellites supporté par un anneau du lanceur, chaque étage de l'empilement comprenant au moins deux satellites (20) disposés autour d'un axe géométrique central (A-A) de l'empilement, et dans lequel les satellites d'un des étages, à l'exception du premier étage, sont empilés sur les satellites du précédent étage,
le lanceur comprenant un dispositif (4) de maintien et de libération des satellites maintenant les satellites de l'empilement solidaires entre eux et solidaires du lanceur dans une configuration initiale, où des premières quantités d'énergie sont stockées dans des dispositifs d'écartement (50) disposés entre les étages consécutifs de l'empilement et tendant à séparer deux étages consécutifs de l'empilement, où le système comprend:
- un premier module de commande d'une orientation du lanceur en tangage de sorte que l'axe de l'empilement de satellites soit incliné par rapport à un axe tangent à une orbite de défilement des satellites, dit axe de défilement,
- un second module de commande d'une libération des satellites par rapport au lanceur et entre eux, provoquant la libération des premières quantités d'énergie stockées entre les étages de l'empilement, résultant en l'application d'efforts, selon l'axe de l'empilement, sur les différents étages de satellites, dont les projections sur l'axe de défilement sont différentes pour chaque étage, **caractérisé en ce que** les premières quantités d'énergie stockées entre deux étages consécutifs sont décroissantes depuis les deux extrémités de l'empilement vers le milieu de l'empilement et **en ce que** les dispositifs d'écartement entre deux étages consécutifs génèrent des efforts décroissants depuis les deux extrémités de l'empilement vers le milieu de l'empilement,
et **en ce qu'**il comprend:
- un troisième module d'application, sur les satellites d'un même étage, lors de la libération des satellites, d'actions dans un plan radial, par rapport à l'axe de l'empilement correspondant à une direction longitudinale, dont les projections sur l'axe de défilement sont différentes pour chaque satellite de l'étage,
la libération des satellites intervenant à un angle en roulis déterminé en fonction des premières quantités d'énergie stockées et des actions dans le plan radial.

11. Système spatial d'éjection selon la revendication 10, dans lequel l'empilement (2) de satellites (20) comprend au moins un ressort mécanique préchargé (50) entre tous les satellites consécutifs de l'empilement, la précharge des ressorts formant lesdites premières quantités d'énergie stockées.

12. Système spatial d'éjection selon l'une des revendications 10 ou 11, dans lequel la variation des premières quantités d'énergie stockées et/ou des efforts exercés par les dispositifs d'écartement, entre deux étages consécutifs, depuis les extrémités vers le milieu de l'empilement, est mise en œuvre par au moins l'un parmi :
- une variation de la raideur des ressorts,
- une variation de la précharge appliquée aux ressorts, et
- une variation du nombre de ressorts.

13. Système spatial d'éjection selon l'une des revendications 10 ou 11, dans lequel le troisième module commande, avant la libération des satellites, au moins une mise en rotation du lanceur par rapport à l'axe d'empilement (A-A), ladite mise en rotation donnant aux satellites d'un même étage des composantes différentes de vitesse selon un axe (X) de défilement des satellites, lors de la libération des satellites, la libération des satellites étant prévue à un premier angle en roulis.

14. Système spatial d'éjection selon l'une des revendications 10 à 12, dans lequel le troisième module réalise un stockage de secondes quantités d'énergie stockées entre les satellites voisins, disposés face à face dans un même étage, tendant à écarter les satellites voisins, de sorte que la libération des satellites provoque en outre la libération desdites secondes quantités d'énergie et l'application, sur les satellites d'un même étage, des efforts radiaux, la libération des satellites étant prévue à un second angle en roulis.

15. Système spatial d'éjection selon l'une des revendications 10 à 14, dans lequel dans la configuration initiale, au moins une troisième quantité d'énergie est stockée entre une paroi (11) de l'anneau de support de l'empilement et l'empilement de satellites, tendant à séparer l'empilement de cette paroi(11).

16. Système spatial d'éjection selon l'une des revendications 10 à 15, dans lequel la troisième quantité d'énergie stockée entre la paroi de l'anneau de support et l'empilement de satellites implique un effort longitudinal supérieur à l'effort longitudinal maximal entre deux satellites d'étages consécutifs et par ailleurs la troisième quantité d'énergie stockée est supérieure à la quantité d'énergie maximale stockée entre deux étages consécutifs de l'empilement.

## Patentansprüche

1. Verfahren zum Ausstoßen eines Stapels (2) Satelliten (20), die in einer Trägerrakete (1) enthalten sind, wobei der Satellitenstapel mehrere Etagen (21) aufweist, jede Etage des Stapels mindestens zwei Satelliten (20) aufweist, die um eine geometrische Mittelachse (A-A) des Stapels herum angeordnet sind, und die Satelliten einer der Etagen, mit Ausnahme der ersten Etage, auf den Satelliten der vorherigen Etage gestapelt sind,
wobei das Ausstoßungsverfahren ausgehend von einer Anfangskonfiguration durchgeführt wird,
in welcher die Satelliten des Stapels von einer Halte- und Freisetzungsvorrichtung (4) miteinander und mit der Trägerrakete verbunden gehalten werden, wobei erste Energiemengen in Beabstandungsvorrichtungen (50), die zwischen den aufeinanderfolgenden Etagen des Stapels angeordnet sind, gespeichert sind und danach streben, zwei aufeinanderfolgende Etagen des Stapels zu separieren, wobei die zwischen zwei aufeinanderfolgenden Etagen gespeicherten ersten Energiemengen von den zwei Enden des Stapels zur Mitte des Stapels hin abnehmend sind, und die Beabstandungsvorrichtungen zwischen zwei aufeinanderfolgenden Etagen Kräfte erzeugen, die von den zwei Enden des Stapels zur Mitte des Stapels hin abnehmend sind,
und wobei das Verfahren aufweist:
- eine Orientierung (100) der Trägerrakete um eine Nickachse, so dass die Achse (A-A) des Satellitenstapels bezüglich einer Achse, die tangential zu einer Umlaufbahn der Satelliten ist, genannt Umlaufbahnachse, geneigt ist,
- eine Freisetzung (200) der Satelliten von der Trägerrakete und voneinander, die die Freisetzung der zwischen den Etagen des Stapels gespeicherten ersten Energiemengen hervorruft, wodurch Kräfte in Richtung der Achse des Stapels auf die verschiedenen Satellitenetagen einwirken, die Projektionen der Kräfte auf die Umlaufbahnachse für jede Etage unterschiedlich sind, und
- eine Anwendung (300) von Aktionen auf die Satelliten (20) derselben Etage (21) bei Freisetzung der Satelliten, wobei die Aktionen in einer bezogen auf die Stapelachse oder Längsrichtung radialen Ebene erfolgen, die Projektionen der Aktionen auf die Umlaufbahnachse für jeden Satelliten der Etage unterschiedlich sind, wobei die Freisetzung der Satelliten bei einem Rollwinkel stattfindet, der sich als Funktion der gespeicherten ersten Energiemengen und der Aktionen in der radialen Ebene bestimmt.

2. Ausstoßungsverfahren nach Anspruch 1, in welchem der Stapel (2) Satelliten (20) mindestens eine vorbelastete mechanische Feder (50) zwischen allen aufeinanderfolgenden Satelliten des Stapels aufweist, wobei die Vorbelastung der Federn die gespeicherten ersten Energiemengen bildet.

3. Ausstoßungsverfahren nach Anspruch 1, in welchem die Variation der gespeicherten ersten Energiemengen und/oder der von den Beabstandungsvorrichtungen zwischen zwei aufeinanderfolgenden Etagen einwirkenden Kräfte von den Enden hin zur Mitte des Stapels realisiert ist durch:
- eine Variation der Steifigkeit der Federn (50) und/oder
- eine Variation der an den Federn (50) anliegenden Vorbelastung und/oder
- eine Variation der Anzahl an Federn (50).

4. Ausstoßungsverfahren nach einem der vorstehenden Ansprüche, aufweisend vor der Freisetzung der Satelliten zumindest eine Rotation (110) der Trägerrakete (1) bezüglich der Stapelachse (A-A), wobei die Rotation den Satelliten (20) derselben Etage (21) bei der Freisetzung der Satelliten unterschiedliche Geschwindigkeitskomponenten in Richtung der Umlaufbahnachse verleiht, die Freisetzung der Satelliten bei einem ersten Rollwinkel stattfindet.

5. Ausstoßungsverfahren nach dem vorstehenden Anspruch, aufweisend das Senden von Fernbefehlen aus einer sendenden Bodenstation:
- einen Fernbefehl für eine bestimmte Nickneigung,
- einen Fernbefehl zum Versetzen der Trägerrakete in Rotation um die Längsachse mit einer bestimmten Rotationsgeschwindigkeit,
- einen Fernbefehl zur Freisetzung aller Satelliten bei einem bestimmten Rollwinkel (->Winkel), der dem ersten Winkel (-> Rollwinkel) entspricht.

6. Ausstoßungsverfahren nach einem der Ansprüche 1 bis 4, in welchem in der Anfangskonfiguration zweite Energiemengen zwischen den benachbarten Satelliten, die sich in derselben Etage gegenüberliegen, gespeichert sind, die zweiten Energiemengen danach streben, die benachbarten Satelliten zu beabstanden, so dass die Freisetzung der Satelliten außerdem die Freisetzung der zweiten Energiemengen und das Einwirken radialer Kräfte auf die Satelliten derselben Etage hervorruft, wobei die Freisetzung der Satelliten bei einem zweiten Rollwinkel stattfindet.

7. Ausstoßungsverfahren nach dem vorstehenden Anspruch, aufweisend das Senden von Fernbefehlen aus einer sendenden Bodenstation:
- einen Fernbefehl für eine bestimmte Nickneigung,
- einen Fernbefehl zum Orientieren der Trägerrakete um eine Rollachse in einem bestimmten Winkel, der dem zweiten (Roll)Winkel entspricht,
- einen Fernbefehl zur Freisetzung aller Satelliten.

8. Ausstoßungsverfahren nach einem der vorstehenden Ansprüche, in welchem in der Anfangskonfiguration mindestens eine dritte Energiemenge zwischen einer Wand des Trägerrings des Stapels und dem Satellitenstapel gespeichert ist, die dritte Energiemenge danach strebt, den Stapel von dieser Trägerwand zu trennen.

9. Ausstoßungsverfahren nach dem vorstehenden Anspruch, in welchem die zwischen der Wand des Trägerrings und dem Satellitenstapel gespeicherte dritte Energiemenge eine Längskraft impliziert, die größer als die maximale Längskraft zwischen zwei Satelliten aufeinanderfolgender Etagen ist, und zudem die gespeicherte dritte Energiemenge größer als die zwischen zwei aufeinanderfolgenden Etagen des Stapels gespeicherte maximale Energiemenge ist.

10. Raumsystem zum Ausstoßen eines mehrere Etagen (21) aufweisenden Stapels (2) Satelliten (20), wobei das System eine Trägerrakete (1) aufweist, die den von einem Ring der Trägerrakete getragenen Satellitenstapel enthält, jede Etage des Stapels mindestens zwei Satelliten (20) aufweist, die um eine geometrische Mittelachse (A-A) des Stapels herum angeordnet sind, und die Satelliten einer der Etagen, mit Ausnahme der ersten Etage, auf den Satelliten der vorherigen Etage gestapelt sind,
wobei die Trägerrakete eine Satellitenhalte- und Satellitenfreisetzungsvorrichtung (4) aufweist, die in einer Anfangskonfiguration die Satelliten des Stapels miteinander und mit der Trägerrakete verbunden hält, wobei erste Energiemengen in Beabstandungsvorrichtungen (50), die zwischen den aufeinanderfolgenden Etagen des Stapels angeordnet sind, gespeichert sind und danach streben, zwei aufeinanderfolgende Etagen des Stapels zu separieren,
wobei das System aufweist:
- ein erstes Modul zur Steuerung einer Orientierung der Trägerrakete um eine Nickachse, so dass die Achse des Satellitenstapels bezüglich einer Achse, die tangential zu einer Umlaufbahn der Satelliten ist, genannt Umlaufbahnachse, geneigt ist,
- ein zweites Modul zur Steuerung einer Freisetzung der Satelliten von der Trägerrakete und voneinander, die die Freisetzung der zwischen den Etagen gespeicherten ersten Energiemengen hervorruft, wodurch Kräfte in Richtung der Achse des Stapels auf die verschiedenen Satellitenetagen einwirken, die Projektionen der Kräfte auf die Umlaufbahnachse für jede Etage unterschiedlich sind,
**dadurch gekennzeichnet, dass** die zwischen zwei aufeinanderfolgenden Etagen gespeicherten ersten Energiemengen von den zwei Enden des Stapels zur Mitte des Stapels hin abnehmend sind, und dadurch, dass die Beabstandungsvorrichtungen zwischen zwei aufeinanderfolgenden Etagen Kräfte erzeugen, die von den zwei Enden des Stapels zur Mitte des Stapels hin abnehmend sind,
und dadurch, dass das System aufweist:
- ein drittes Modul zur Anwendung von Aktionen auf die Satelliten derselben Etage bei Freisetzung der Satelliten, wobei die Aktionen in einer bezogen auf die Stapelachse oder Längsrichtung radialen Ebene erfolgen, die Projektionen der Aktionen auf die Umlaufbahnachse für jeden Satelliten der Etage unterschiedlich sind,
wobei die Freisetzung der Satelliten bei einem Rollwinkel stattfindet, der sich als Funktion der gespeicherten ersten Energiemengen und der Aktionen in der radialen Ebene bestimmt.

11. Raumsystem zum Ausstoßen nach Anspruch 10, in welchem der Stapel (2) Satelliten (20) mindestens eine vorbelastete mechanische Feder (50) zwischen allen aufeinanderfolgenden Satelliten des Stapels aufweist, wobei die Vorbelastung der Federn die gespeicherten ersten Energiemengen bildet.

12. Raumsystem zum Ausstoßen nach einem der Ansprüche 10 oder 11, in welchem die Variation der gespeicherten ersten Energiemengen und/oder der von den Beabstandungsvorrichtungen zwischen zwei aufeinanderfolgenden Etagen einwirkenden Kräfte von den Enden hin zur Mitte des Stapels realisiert ist durch:
- eine Variation der Steifigkeit der Federn und/oder
- eine Variation der an den Federn anliegenden Vorbelastung und/oder
- eine Variation der Anzahl an Federn.

13. Raumsystem zum Ausstoßen nach einem der Ansprüche 10 oder 11, in welchem vor der Freisetzung der Satelliten das dritte Steuermodul zumindest eine Rotation der Trägerrakete bezüglich der Stapelachse (A-A) steuert, wobei die Rotation den Satelliten derselben Etage bei der Freisetzung der Satelliten unterschiedliche Geschwindigkeitskomponenten in Richtung der Umlaufbahnachse (X) verleiht, die Freisetzung der Satelliten bei einem ersten Rollwinkel vorgesehen ist.

14. Raumsystem zum Ausstoßen nach einem der Ansprüche 10 bis 12, in welchem das dritte Modul eine Speicherung von zweiten Energiemengen realisiert, die zwischen den benachbarten Satelliten, die sich in derselben Etage gegenüberliegen, gespeichert sind, die zweiten Energiemengen danach streben, die benachbarten Satelliten zu beabstanden, so dass die Freisetzung der Satelliten außerdem die Freisetzung der zweiten Energiemengen und das Einwirken radialer Kräfte auf die Satelliten derselben Etage hervorruft, wobei die Freisetzung der Satelliten bei einem zweiten Rollwinkel vorgesehen ist.

15. Raumsystem zum Ausstoßen nach einem der Ansprüche 10 bis 14, in welchem in der Anfangskonfiguration mindestens eine dritte Energiemenge zwischen einer Wand (11) des Trägerrings des Stapels und dem Satellitenstapel gespeichert ist, die dritte Energiemenge danach strebt, den Stapel von dieser Wand (11) zu trennen.

16. Raumsystem zum Ausstoßen nach einem der Ansprüche 10 bis 15, in welchem die zwischen der Wand des Trägerrings und dem Satellitenstapel gespeicherte dritte Energiemenge eine Längskraft impliziert, die größer als die maximale Längskraft zwischen zwei Satelliten aufeinanderfolgender Etagen ist, und zudem die gespeicherte dritte Energiemenge größer als die zwischen zwei aufeinanderfolgenden Etagen des Stapels gespeicherte maximale Energiemenge ist.

## Claims

1. Method for ejecting a stack (2) of satellites (20) contained in a launcher (1), the satellite stack comprising a plurality of stages (21), each stage of the stack comprising at least two satellites (20) disposed about a central geometric axis (A-A) of the stack, and wherein the satellites of one of the stages, except the first stage, are stacked on the satellites of the previous stage,
the ejection method being implemented from an initial configuration in which the satellites of the stack are held together and secured to the launcher by a holding and release device (4), initial amounts of energy being stored in spacer devices (50) positioned between the consecutive stages of the stack, and tending to separate two consecutive stages of the stack, the first amounts of energy stored between two consecutive stages decreasing from both ends of the stack towards the middle of the stack and the spacer devices between two consecutive stages generating forces decreasing from both ends of the stack towards the middle of the stack,
and the method comprising:
- an orientation (100) of the launcher in pitch such that the axis (A-A) of the satellite stack is inclined relative to an axis tangent to a deployment orbit of the satellites, referred to as the deployment axis,
- a release (200) of the satellites relative to the launcher and between them, causing the release of the first amounts of energy stored between the stages of the stack, resulting in the application of forces, along the axis of the stack, on the various stages of satellites, the projections of which on the deployment axis are different for each stage, and
- an application (300), on the satellites (20) of the same stage (21) during the release of the satellites, of actions in a radial plane relative to the stacking axis corresponding to a longitudinal direction, the projections on the deployment axis of which are different for each satellite of the stage, the release of the satellites taking place at a roll angle determined according to the first quantities of stored energy and the actions in the radial plane.

2. Ejection method according to claim 1, wherein the stack (2) of satellites (20) comprises at least one preloaded mechanical spring (50) between all the consecutive satellite in the stack, the preload of the springs constituting the aforementioned first quantities of stored energy.

3. Ejection method according to claim 1, wherein the variation in the first amounts of stored energy and/or in the forces exerted by the spacer devices, between two consecutive stages, from the ends towards the middle of the stack, is implemented by at least one of:
- a variation in the stiffness of the springs (50),
- a variation in the preload applied to the springs (50), and
- a variation in the number of springs (50).

4. Ejection method according to one of the preceding claims, comprising, prior to the release of the satellites, at least one rotation (110) of the launcher (1) with respect to the stacking axis (A-A), said rotation imparting different speed components to the satellites (20) of the same stage (21) along the deployment axis, the release of the satellites occurring at a first roll angle.

5. Ejection method according to the preceding claim, comprising sending remote commands from a ground station sending:
- An inclination remote command determined in pitch,
- A remote command for rotating the launcher about the longitudinal axis at a given rotational speed,
A remote command for releasing all the satellites at a given roll angle corresponding to the first angle.

6. Ejection method according to one of claims 1 to 4, wherein, in the initial configuration, second amounts of energy are also stored between the neighbouring satellites, arranged face to face in the same stage, tending to push the neighbouring satellites apart, such that the release of the satellites additionally causes the release of said second amounts of energy and the application of radial forces to the satellites in the same stage, the release of the satellites occurring at a second roll angle.

7. Ejection method according to the preceding claim, comprising sending remote commands from a ground station sending:
- An inclination remote command determined for pitch
- A remote command for roll orientation of the launcher at a determined angle corresponding to the second angle
- A remote command to release all the satellites.

8. Ejection method according to one of the preceding claims, wherein, in the initial configuration, at least a third amount of energy is stored between a wall of the ring supporting the stack and the stack of satellites, tending to separate the stack from this support wall.

9. Method according to the preceding claim, wherein the third amount of energy stored between the wall of the support ring and the satellite stack entails a longitudinal force greater than the maximum longitudinal force between two consecutive stage satellites, and furthermore the third amount of energy stored exceeds the maximum amount of energy stored between two consecutive stages of the stack.

10. Space system for ejecting a stack (2) of satellites (20) comprising a plurality of stages (21), comprising a launcher (1) receiving the stack (2) of satellites supported by a ring of the launcher, each stage of the stack comprising at least two satellites (20) arranged around a central geometric axis (A-A) of the stack, and wherein the satellites of one of the stages, except for the first stage, are stacked on the satellites of the preceding stage,
the launcher comprising a device (4) for holding and releasing the satellites, keeping the satellites of the stack secured to one another and to the launcher in an initial configuration, where first amounts of energy are stored in spacer devices (50) positioned between the consecutive stages of the stack and tending to separate two consecutive stages of the stack, wherein the system comprises:
- a first module for controlling an orientation of the launcher in pitch, such that the axis of the satellite stack is inclined relative to an axis tangent to a deployment orbit of the satellites, referred to as the deployment axis,
- a second module for controlling the release of the satellites in relation to the launcher and to each other, causing the release of the first quantities of energy stored between the stages of the stack, resulting in the application of forces along the axis of the stack on the various satellite stages, the projections of which onto the deployment axis differ for each stage,
**characterised in that** the first amounts of energy stored between two consecutive stages decrease from both ends of the stack towards the middle, and **in that** the spacer devices between two consecutive stages generate forces decreasing from both ends of the stack towards the middle, and **in that** it comprises:
- a third module applying, to the satellites of the same stage, during the release of the satellites, actions in a radial plane relative to the stacking axis corresponding to a longitudinal direction, the projections of which on the deployment axis are different for each satellite of the stage,
the release of the satellites occurring at a roll angle determined by the initial amounts of stored energy and the actions in the radial plane.

11. Space ejection system according to claim 10, wherein the stack (2) of satellites (20) comprises at least one preloaded mechanical spring (50) between all the consecutive satellite in the stack, the preload of the springs forming said first quantities of stored energy.

12. Space ejection system according to one of claims 10 or 11, wherein the variation in the initial amounts of stored energy and/or in the forces exerted by the spacer devices, between two consecutive stages, from the ends towards the middle of the stack, is implemented by at least one of:
- a variation in spring stiffness,
- a variation in the preload applied to the springs, and
- a variation in the number of springs.

13. Space ejection system according to one of claims 10 or 11, wherein the third module controls, prior to the release of the satellites, at least one rotation of the launcher with respect to the stacking axis (A-A), said rotation providing the satellites of the same stage with different speed components along an axis (X) of deployment of the satellites, the release of the satellites being provided at a first roll angle.

14. Space ejection system according to one of claims 10 to 12, wherein the third module stores second amounts of energy stored between the neighbouring satellites, arranged face-to-face in the same stage, tending to separate the neighbouring satellites, such that the release of the satellites also causes the release of said second amounts of energy and the application of radial forces on the satellites of the same stage, the release of the satellites been provided at a second roll angle.

15. Space ejection system according to one of claims 10 to 14, wherein, in the initial configuration, at least a third amount of energy is stored between a wall (11) of the support ring of the stack and the stack of satellites, tending to separate the stack from this wall (11).

16. Space ejection system according to one of claims 10 to 15, wherein the third amount of energy stored between the wall of the support ring and the satellite stack involves a longitudinal force greater than the maximum longitudinal force between two consecutive stage satellites, and furthermore, the third amount of energy stored exceeds the maximum amount of energy stored between two consecutive stages of the stack.
